# EUROPÄISCHE PATENTANMELDUNG

(11) **EP 2 116 886 A1**
(43) Veröffentlichungstag der Anmeldung: **11.11.2009**
(21) Anmeldenummer: 09100239.4
(22) Anmeldetag: 20.04.2009
(51) Int. Cl.: G02B 26/10, G02B 27/18, H04N 5/74

(54) **Projektionsverfahren und Projektionsvorrichtung**

(30) Priorität: 07.05.2008 DE 102008001623
(71) Anmelder: ROBERT BOSCH GMBH, 70442 Stuttgart (DE)
(72) Erfinder: Freund, Frank, 70439 Stuttgart (DE)

(57) **Zusammenfassung**

Die Erfindung betrifft ein Projektionsverfahren mit den Schritten: Auswählen von parallelen Linienabschnitten (Z1-Z7) einer Lissajous-Figur (10); Zuordnen von Zeilen oder Spalten eines Bildes zu den ausgewählten parallelen Linienabschnitten (Z1-Z7) und Projizieren der zugeordneten Zeilen oder zugeordneten Spalten basierend auf der Lissajous-Figur (10).

## Beschreibung

### STAND DER TECHNIK

Die vorliegende Erfindung betrifft ein Projektionsverfahren und eine Projektionsvorrichtung.

Aus der US 6,843,568 ist eine Projektionsvorrichtung für ein Bild bekannt. Die Projektion basiert auf einem Laserlichtstrahl, der durch einen um zwei Achsen schwingenden Spiegel entlang einer Lissajous-Figur abgelenkt wird. Jeder Punkt entlang der Lissajous-Figur kann als Bildpunkt des Bildes durch eine Modulation der Intensität des Laserlichtstrahls genutzt werden. Eine Ablenkungseinrichtung des Spiegels erfasst Umkehrpunkte des Spiegels, um die Modulationseinheit zu synchronisieren.

### OFFENBARUNG DER ERFINDUNG

Bei dem erfindungsgemäßen Verfahren mit den Merkmalen des Anspruchs 1 werden folgende Schritte durchgeführt:
Auswählen von parallelen Linienabschnitten einer Lissajous-Figur;
Zuordnen von Zeilen oder Spalten eines Bildes zu den ausgewählten parallelen Linienabschnitten und
Projizieren der zugeordneten Zeilen oder zugeordneten Spalten basierend auf der Lissajous-Figur.

Eine Auflösung der Projektion des Bildes ist nicht durch die Lissajous-Figur begrenzt, insbesondere nicht durch die Anzahl von Kreuzungspunkten oder anderen ausgezeichneten Punkte der Lissajous-Figur.

Die Lissajous-Figur kann beim Projizieren derart gedreht werden, dass die ausgewählten parallelen Linienabschnitte horizontal auf einer Projektionsfläche verlaufen, wenn den ausgewählten parallelen Linienabschnitten die Zeilen zugeordnet werden oder die ausgewählten parallelen Linienabschnitte vertikal auf der Projektionsfläche verlaufen, wenn den ausgewählten parallelen Linienabschnitten die Spalten zugeordnet werden.

Die Darstellung des Bildes durch die Projektion kann ohne ein Verkippen erfolgen. Der Betrachter nimmt das Bild in gewohnter Weise mit den Zeilen horizontal ausgerichtet und Spalten vertikal ausgerichtet wahr. Horizontal kann als parallel zu der Verbindungslinie der Augen definiert werden und vertikal als senkrecht zu horizontal. Alternativ kann vertikal als parallel zur Wirkung des Gravitationsfeldes festgelegt werden und horizontal als senkrecht zu vertikal.

### KURZE BESCHREIBUNG DER ZEICHNUNGEN

Die vorliegende Erfindung wird nachfolgend anhand bevorzugter Ausführungsformen und beigefügten Figuren erläutert. In den Figuren zeigen:
- Fig. 1: ein Blockdiagramm einer Projektionsvorrichtung;
- Fig. 2: eine Lissajous-Figur bei Verwendung gemäß einem Projektionsverfahren;
- Fig. 3: ein Flussdiagramm von Teilschritten des Projektionsverfahrens;
- Fig. 4: zeigt ein Blockdiagramm einer Projektionsvorrichtung;
- Fig. 5: ein Flussdiagramm von Teilschritten des Projektionsverfahrens und
- Fig. 6: zeigt ein Blockdiagramm einer Projektionsvorrichtung.

### AUSFÜHRUNGSFORMEN DER ERFINDUNG

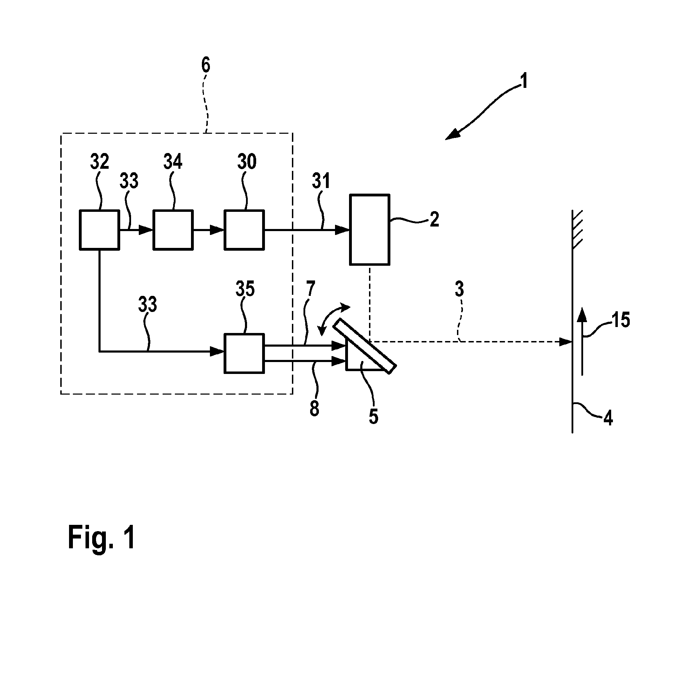

Figur 1 zeigt als Blockschema eine erste Ausführungsform einer Projektionsvorrichtung 1. Die Projektionsvorrichtung 1 weist eine Laserlichtquelle 2 auf. Ein von der Laserlichtquelle 2 ausgegebener Lichtstrahl 3 wird auch eine Projektionsfläche 4 umgelenkt. Die Umlenkung erfolgt durch eine Ablenkeinrichtung 5. Die Ablenkeinrichtung 5 weist eine Spiegelanordnung auf, die um zwei unabhängige Achsen gekippt werden kann. Vorzugsweise sind die beiden Achsen zueinander orthogonal. Der Lichtstrahl 3 kann auf diese Weise entlang beider Richtungen in der Ebene der Projektionsfläche 4 abgelenkt werden.

Anstelle einer Laserlichtquelle 2 können auch andere Lichtquellen zum Erzeugen eines Lichtpunkts auf der Projektionsfläche 4 verwendet werden.

Anstelle oder kombiniert mit der Spiegelanordnung können auch andere Ablenksysteme verwendet werden. Insbesondere können hierfür akusto-optische Modulatoren verwendet werden.

Die Ablenkeinrichtung 5 wird durch eine Steuereinrichtung 6 und zwei von ihr ausgegebene Ablenksignale 7, 8 angesteuert. Das erste Ablenksignal 7 steuert eine erste Achse und das zweite Ablenksignal 8 eine zweite Achse der Ablenkeinrichtung 5 an. Das erste und zweite Ablenksignal 7, 8 sind periodische Signale. Vorzugsweise sind beide sinusförmig oder nahezu sinusförmig. Die Ablenkeinrichtung 5 vollführt aufgrund der beiden Steuersignale 7, 8 zwei unabhängige Schwingbewegungen um ihre beiden Achsen. Durch die sinusförmigen Schwingungen wird der Lichtstrahl 3 derart abgelehnt, dass eine Lissajous-Figur auf die Projektionsfläche 4 gezeichnet wird.

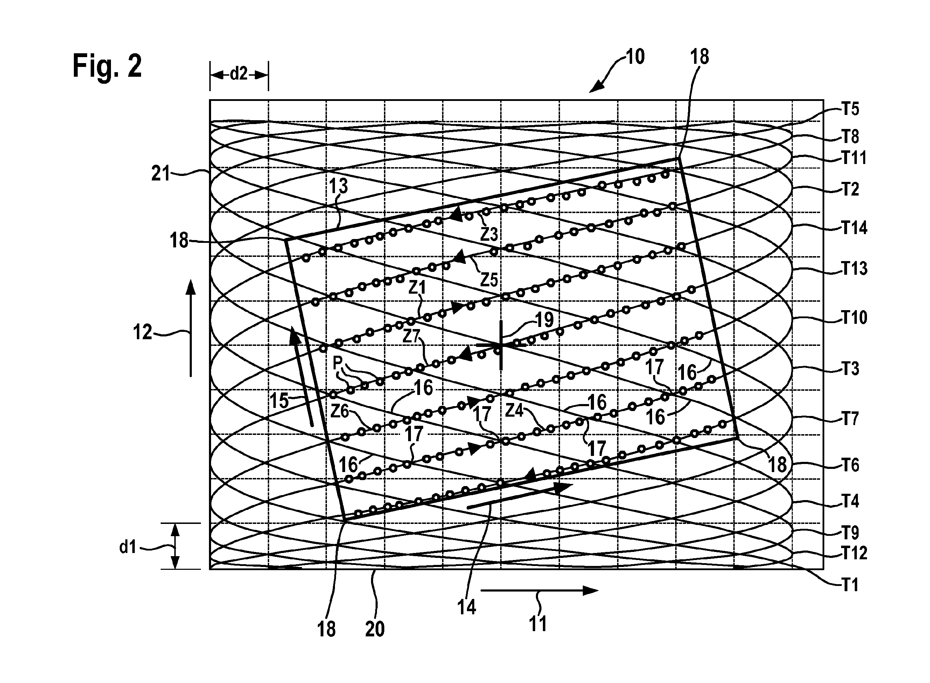

Eine beispielhafte Lissajous-Figur 10 ist in Figur 2 dargestellt. Der Lichtstrahl 3 vollführt sowohl in einer ersten Ablenkrichtung 11 und einer zweiten Ablenkrichtung 12 durch die Ablenkeinrichtung 5 vorgegebene Bewegung durch. Die in Figur 2 durchgezogen dargestellten Linien sind die Lissajous-Figur 10. Die Kurve der Lissajous-Figur 10 hängt von den unabhängig gewählten Perioden der beiden Steuersignal 7, 8 ab. Eine geschlossene Kurve der Lissajous-Figur 10 ergibt sich, wenn die Perioden ein ganzzahliges Vielfaches voneinander sind. Die Lissajous-Figur 10 wiederholt sich mit einer Rate gleich dem kleinsten gemeinsamen Vielfachen der beiden Perioden der Steuersignale 7, 8.

Vorzugsweise werden die Perioden mit einem ganzzahligen Vielfachen voneinander gewählt. Bei der in Figur 2 dargestellten Lissajous-Figur 10 weisen die Perioden der Steuersignale 7, 8 ein Verhältnis von 14 zu 5 auf.

Die zeitliche Reihenfolge von Umkehrpunkten T1-T14 der Lissajous-Figur 10 sind in der Figur 2 durch die Bezugszeichen T1 bis T14 angegeben. Eine Laufrichtung des Lichtstrahls 3 ist durch die angedeuteten Pfeile symbolisiert.

Die Projektionsvorrichtung 1 verwendet zum Darstellen eines Bildes von der Lissajous Figur nur einen Ausschnitt 13. Die Abmessungen des Ausschnitts 13 entlang einer horizontalen Richtung 14 und einer vertikalen Richtung 15 sind entsprechend den Proportionen des Bildes gewählt. Wie aus Figur 2 ersichtlich sind Linienabschnitte Z1 bis Z7 in etwa parallel zu der horizontalen Richtung 14. Der Ausschnitt 13 ist gedreht oder verkippt zu der Lissajous-Figur 10 derart gewählt, dass ein Rand des Bildes parallel zu den horizontalen Linienabschnitten Z1 bis Z7 liegt. Die Neigung zwischen der ersten Ablenkeinrichtung 11 und der horizontalen Richtung 14 ergibt sich durch das Verhältnis der Periodizität der beiden Ablenksignale 7, 8.

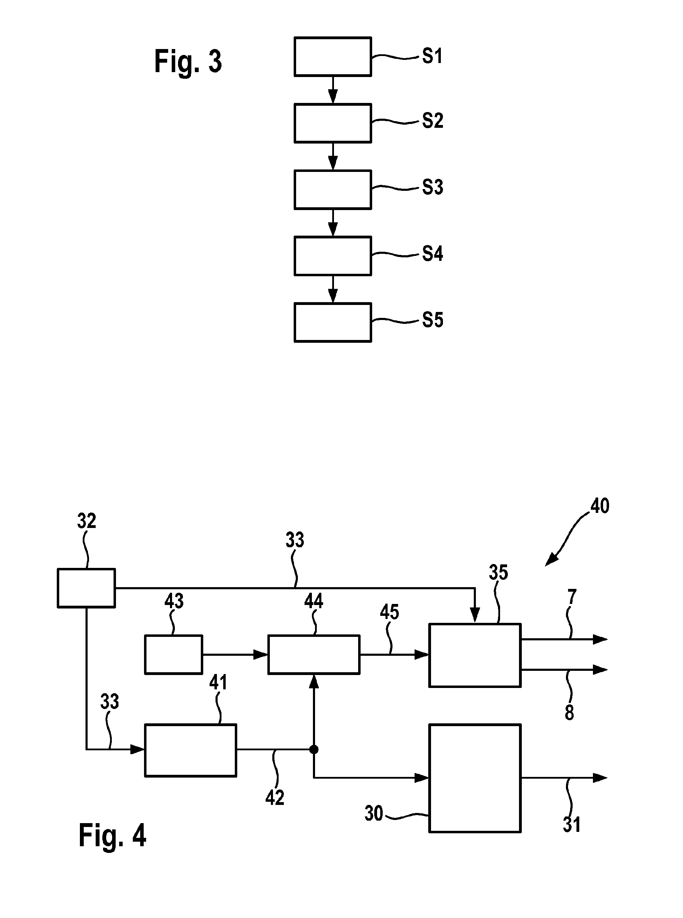

Die Lage des Ausschnitts 13 innerhalb der Lissajous-Figur 10 kann nach folgendem Verfahren ermittelt werden, welches als Flussdiagramm in Fig. 3 angegeben ist.

Es wird ein Linienabschnitt Z7 ausgewählt, der durch die Mitte 19 der Lissajous-Figur 10 verläuft, oder den geringsten Abstand zur Mitte 19 aufweist (S1). Die Richtung des ausgewählten Linienabschnitts Z7 in einer Umgebung der Mitte 19 wird als horizontale Richtung 14 definiert (S2). Eine Richtung senkrecht zu der horizontalen Richtung 14 wird der vertikalen Richtung 15 zugeordnet.

Positionen der Ecken 18 des Ausschnitts 13 werden derart bestimmt, dass ihre relativen Abstände in horizontaler Richtung 14 und vertikaler Richtung 15 den Proportionen des Bildes entsprechen, die Ecken 18 in etwa gleichen Abstand zur Mitte 19 der Lissajous-Figur aufweisen und die durch die Ecken definierten Ränder des Ausschnitts 13 parallel zu der horizontalen Richtung 14 oder vertikalen Richtung 15 sind (S3).

Die horizontalen Linienabschnitte Z1 bis Z7 innerhalb des Ausschnitts 13 weisen mit zunehmender Größe des Ausschnitts 13, d.h. mit wachsendem Abstand der Ecken 18 zu der Mitte 19, Abweichungen von einer Geraden auf. Daher kann in einer Ausführungsform ein maximaler Radius der Ecken 18 von der Mitte 19 bzw. ein minimaler Abstand d1 von einem horizontalen Rand 20 und ein minimaler Abstand d2 von einem vertikalen Rand 21 der Lissajous-Figur 10 festgelegt werden (S4). In einer Ausgestaltung beträgt der horizontale minimale Abstand d1 wenigstens 5%, z.B. wenigstens 10%, höchstens 20%, etwa 10%, der vertikalen Abmessung, d.h. der Höhe, der Lissajous-Figur 10. In einer Ausgestaltung beträgt der vertikale minimale Abstand d2 wenigstens 2,5%, z.B. wenigstens 5%, höchstens 10%, etwa 5%, der horizontalen Abmessung, d.h. der Breite, der Lissajous-Figur 10. Falls eine der Ecken 18 zu nahe an einem der Ränder 20, 21 ist, kann der Ausschnitt 13 gleichmäßig verkleinert werden (S5). Die Abweichung der horizontalen Linienabschnitte Z1 bis Z7 von einer Geraden und einer mittleren horizontalen Richtung 14 wird somit unterhalb eines Schwellwerts gehalten.

Die Positionen der Ecken 18 können unter Berücksichtigung der genannten Bedingungen und geometrischen Überlegungen berechnet werden.

Die Lage des Ausschnitts 13 kann auch durch eine andere Reihenfolge der Schritte S1, S2, S3, S4, S5 ermittelt werden.

Den horizontalen Linienabschnitten Z1 bis Z7 werden Zeilen des darzustellenden Bildes zugeordnet. Jede Zeile des Bildes kann in eine beliebige Anzahl von Bildpunkten unterteilt werden. Der einer der Zeilen zugehörige Linienabschnitt Z1 bis Z7 wird in eine gleich große Anzahl von Punkten P unterteilt, um somit jedem Bildpunkt einen Punkt P der Lissajous-Figur 10 zuzuordnen.

In einer Ausführungsform wird das Bild in Zeilen und Spalten gerastert. Die Anzahl der Zeilen des Bildes entspricht der Anzahl der horizontalen parallelen Linienabschnitte Z1 bis Z7 innerhalb des Ausschnitts 13. Jeder Linienabschnitt Z1 bis Z7 wird in äquidistante Abschnitte für die Punkte P unterteilt, wobei die Anzahl der Punkte P der Anzahl der Spalten entspricht.

Zu den horizontal verlaufenden Linienabschnitten Z1 bis Z7 verlaufen innerhalb des Ausschnitts 13 noch weitere, schräg verlaufende Linienabschnitte 16 der Lissajous-Figur 10. Die schräg verlaufenden Linienabschnitte 16 und horizontal verlaufenden Linienabschnitte Z1 bis Z7 kreuzen in den Kreuzungspunkten 17.

Die schräg verlaufenden Linienabschnitte 16 werden nicht zum Darstellen des Bildes verwendet.

Die Kreuzungspunkte 17 können zum Darstellen des Bildes verwendet werden, insbesondere wenn einer der Kreuzungspunkte 17 mit einem Punkt P zusammenfällt. Jedoch ist die Ausführungsform nicht darauf beschränkt nur die Kreuzungspunkte 17 zum Darstellen zu verwenden, sondern verwendet vielmehr eine Vielzahl von weiteren Punkten P, die auf den horizontal verlaufenden Linienabschnitten Z1 bis Z7 zwischen den Kreuzungspunkten 17 liegen.

Eine Projektion des Bildes innerhalb des Ausschnitts 13 erfolgt durch eine Modulation der Intensität und/oder des Farbwerts des Lichtstrahls 3. Die Modulation erfolgt synchron mit der Bewegung eines des Lichtstrahls 3 entlang der Lissajous-Figur 10.

Helligkeitswerte und/oder Farbwerte sind für jeden Bildpunkt des Bildes in einem Speicher 30 ablegbar. Die Bildpunkte können in vielfältiger Sortierung in dem Speicher 30 abgelegt werden. Eine erste Ausführungsform sieht vor, die Bildpunkte entsprechend ihrer Reihenfolge herkömmlicher Bilddateiformate, z.B. BMP, Tiff, etc, abzuspeichern. Andere Ausführungsformen sehen eine spezielle Vorsortierung der Bildpunkte vor. Die Sortierung kann die Reihenfolge der zugehörigen Punkte P entlang der Lissajous-Figur 10 berücksichtigen.

Steuersignale 31 entsprechend der Helligkeitswerte der einzelnen Bildpunkte werden an die Lichtquelle 2 ausgegeben. Die Intensität des Lichtstrahls 3 variiert ansprechend auf die Steuersignale 31. In Folge erscheinen die Punkte P im Ausschnitt 13 der Lissajous-Figur 10 mit der den Bildpunkten vorgegebenen Helligkeit. Analog können die Farbwerte bei einer mehrfarbigen Projektionsvorrichtung 1 geändert werden.

Eine Synchronisation der Modulation mit der Bewegung des Lichtstrahls 3 kann durch einen Taktgenerator 32 erreicht werden. Der Taktgenerator 32 gibt ein Taktsignal 33 aus. Das Taktsignal 32 triggert die Ausgabe der Helligkeitswerte aus dem Speicher 30. Hierbei kann wie in Figur 1 dargestellt eine Adressiereinrichtung 34 zwischengeschaltet sein. Das Taktsignal 33 wird zugleich einem Signalgenerator 35 zugeführt, der die Ablenksignale 7, 8 generiert.

In einer anderen Ausführungsform werden die Steuersignale 7, 8 oder die aktuelle Auslenkung der Ablenkeinrichtung 5 von einer Sensoreinrichtung erfasst. Oder die Sensoreinrichtung erfasst spezielle Positionen der Ablenkeinrichtung 5, wie zum Beispiel die Umkehrpunkte einer Schwingung. Der Taktgenerator 32 wird auf die Bewegung der Ablenkeinrichtung 5 synchronisiert und gibt sein Taktsignal 33 an den Speicher 30 aus.

Unter Bezugnahme auf Figur 2 ist zu erkennen, dass der Lichtstrahl 3 die einen horizontalen Linienabschnitte Z1, Z4 und Z6 von links nach rechts und die anderen horizontalen Linienabschnitte Z2, Z3, Z5, Z7 gegenläufig von rechts nach links überstreicht. Zudem entspricht die zeitliche Reihenfolge, mit der die Linienabschnitte Z1 bis Z7 überstrichen werden (entspricht der Nummerierung der Bezugszeichen), nicht einer Reihenfolge ihrer vertikalen Anordnung.

Bei einer Ausführungsform weist die Addressiereinrichtung 34 eine Zuordnungstabelle auf, welche jeder Zeile eines Bildes den zugehörigen Linienabschnitt Z1 bis Z7 zuordnet. In einer Ausführungsform kann die Zuordnungstabelle durch einen Ringspeicher realisiert werden. Adresszeiger auf die Zeilen sind in der zeitlichen Reihenfolge der zugehörigen Linienabschnitte Z1 bis Z7 in dem Ringspeicher abgelegt. Ein Zeiger auf die Zellen des Ringspeichers wird jedesmal um eins inkrementiert, wenn eine Zeile dargestellt wurde bzw. der Lichtstrahl 3 den zugehörigen Linienabschnitt Z1 bis Z7 überstrichen hat. In der Zuordnungstabelle oder dem Ringspeicher kann ebenfalls abgelegt werden, ob die Bildpunkte für eine Zeile in normaler oder invertierter Reihenfolge ausgelesen werden sollen.

Eine andere Ausführungsform sieht vor, die Bildpunkte vorsortiert in dem Speicher 30 abzulegen, so dass sie mit aufsteigendem Adresszeiger in der Reihenfolge ausgegeben werden, wie ihre zugehörigen Punkte P zeitlich aufeinanderfolgen.

Die Adresssiereinrichtung 34 weist eine Verzögerungseinrichtung auf, die ein Erhöhen des Adresszeigers verhindert, solange der Lichtstrahl 3 sich außerhalb des Ausschnitts befindet. In einer Variante ist hierfür ein Zähler vorgesehen, der durch den Taktgeber 32 bis zu einem Schwellwert erhöht wird. Der Schwellwert wird abhängig davon eingestellt, welches der nächste horizontale Linienabschnitt Z1 bis Z7 ist. Hierdurch kann berücksichtigt werden, dass der zeitliche Abstand zwischen den einzelnen Linienabschnitten Z1 bis Z7 ist unterschiedlich lang ist. In der in Figur 2 dargestellten Lissajous-Figur 10 schwingt die Ablenkeinrichtung 5 um weniger als eine Periode um die erste Richtung 11 zwischen dem Linienabschnitt Z1 und dem Linienabschnitt Z2, jedoch deutlich länger zwischen dem Linienabschnitt Z2 und Z3. Die Schwellwerte können zugehörig zu den Adresszeigern in der Zuordnungstabelle oder dem Ringspeicher hinterlegt werden.

In einer anderen Ausführungsform ist für jede Zeile oder jeden Linienabschnitt Z1 bis Z7 der zeitliche Abstand zu dem unmittelbar vorhergehenden Umkehrpunkt T1 bis T14 der Lissajous-Figur 10 abgespeichert.

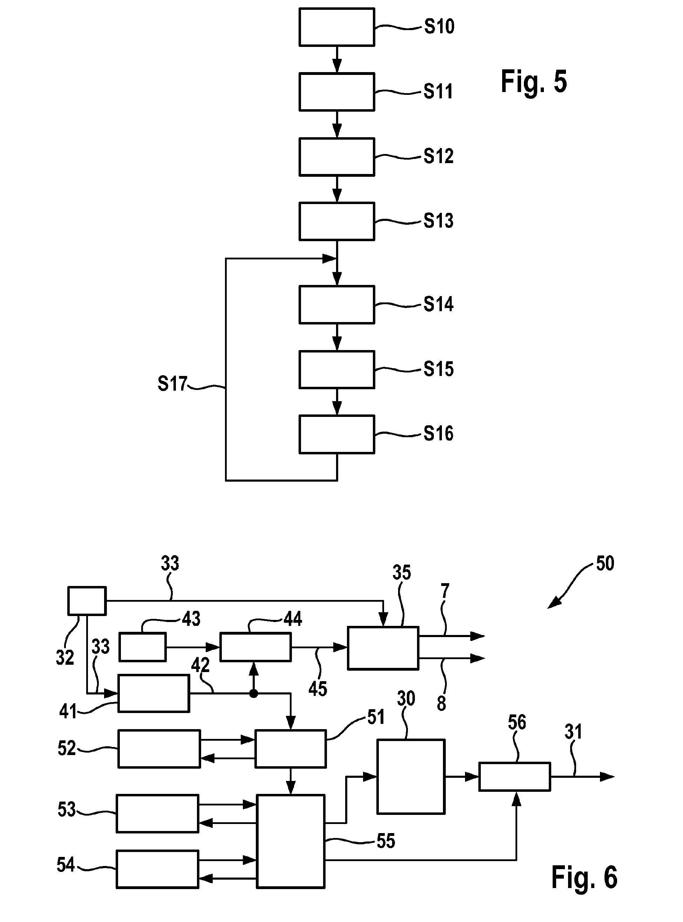

Eine weitere Ausführungsform einer Projektionseinrichtung 40 ist als Blockschaltbild in Figur 4 gezeigt und ein zugehöriges Verfahren als Flussdiagramm in Figur 5.

Ein Signalgenerator 35, eine Speicher 30 für die Bilddaten, ein Taktgenerator 32 zur Synchronisation mit einem Taktsignal 33 sind wie bei den vorherigen Ausführungsformen vorgesehen.

Die Lissajous-Figur 10 wird in Punkte P unterteilt, welche vorzugsweise in äquidistanten zeitlichen Abständen liegen (S 10). Im Gegensatz zu den vorherigen Ausführungsformen werden somit auch Punkte P außerhalb des später verwendeten Ausschnitts 13 und auch auf den später nicht verwendeten schräglaufenden Linienabschnitten 16 definiert. Der Speicher 30 ist ausreichend groß, um für sämtliche Punkte P einen Helligkeitswert und/oder Farbwert zu speichern. Zu Beginn kann eine Nullmatrix angelegt werden (S11), welche sämtlichen Punkten P einen nichtsichtbaren Helligkeitswert und/oder Farbwert zuordnet, typischerweise einen schwarzen Wert.

Die Bildpunkte eines Bildes werden den Punkten P zugeordnet. Hierzu wird ein Ausschnitt 13 wie oben beschrieben in der Lissajous-Figur 10 festgelegt (S12). Die Zeilen des Bildes und die Bildpunkte in jeder Zeile werden derart umsortiert, dass ihre topologische Anordnung bei der Projektion der Punkte P wiedergeben wird (S 13). Die Punkte P, denen kein Bildpunkt zugeordnet wird, d.h. die außerhalb des Ausschnitts 13 liegen, bleiben schwarz.

Das Taktsignal 33 wird einem Zähler 41 zugeführt. Der Zähler 41 inkrementiert einen Zählerwert 42, der als Addressiersignal 42 an den Speicher 30 ausgeben wird (S14). Der Speicher 30 gibt die aufeinanderfolgenden Helligkeitswerte und/oder Farbwerte für die Punkte P entsprechend der Bildpunkte aus (S 15).

Der Zählerwert 42 wird mit einem Maximalwert 43 durch einen Vergleicher 44 verglichen (S16). Überschreitet der Zählerwert 42 den Maximalwert 43, wird der Zähler 41 zurückgesetzt. Der Maximalwert entspricht vorzugsweise der Anzahl aller Punkte P, die auf der Lissajous-Figur 10 realisiert werden können. Zugleich kann beim Überschreiten ein Synchronisationssignal 45 an den Signalgenerator 35 ausgegeben werden, um die Lissajous-Figur 10 von neuem darzustellen (S 17).

Eine weitere Ausführungsform einer Projektionseinrichtung 50 ist als Blockschaltbild in Figur 6 gezeigt.

Das Bild wird direkt ohne Umsortierung in dem Speicher 30 gespeichert. Der Zählerwert 42 wird einem Vergleicher 51 zugeführt. Der Vergleicher 51 kommuniziert mit einem Zeilenanfang-Speicher 52, ob bei vorliegendem Zählerwert 42 eine Zeile des Bildes beginnt. Eine Zeile des Bildes beginnt, wenn der Lichtstrahl 3 in den Ausschnitt 13 eintritt. In dem Zeilenanfang-Speicher 52 kann eine Tabelle mit all den Zählerwerten 42 enthalten sein, die den Punkten P am seitlichen Rand des Ausschnitts 13 entsprechen.

Ein Zeilenreihenfolge-Speicher 53 und ein Zeilenrichtungs-Speicher 54 geben aus, welcher Zeile ein aktueller Zählerwert 42 entspricht und ob die im Speicher 30 abgelegten Helligkeitswerte in aufsteigender Richtung eines Adresszeigers oder absteigender Richtung des Adresszeigers ausgelesen werden sollen. Eine Adressiereinrichtung 55 ermittelt hieraus einen Adresszeiger für den aktuellen Zählerwert 42.

Die Adressiereinheit 55 kann die ausgegebenen Helligkeits- und/oder Farbwerte mittels einer Dunkeltastungseinrichtung auf Null setzen, wenn einem Zählerwert 42 kein Punkt P in dem Ausschnitt 13 zugeordnet ist.

Die vorherigen Ausführungsformen bezogen sich auf eine zeilenbasierte Darstellung des Bildes. In gleicher Weise kann auch eine spaltenbasierte Darstellung erfolgen. Hierbei werden parallele Linienabschnitte ausgewählt und als vertikal definiert. Die Projektsvorrichtung 1 ist räumlich derart aufgestellt, dass die vertikalen Linienabschnitte vertikal auf die Projektionsfläche 4 projiziert werden.

## Patentansprüche

1. Projektionsverfahren mit den Schritten:
Auswählen von parallelen Linienabschnitten (Z1-Z7) einer Lissajous-Figur (10);
Zuordnen von Zeilen oder Spalten eines Bildes zu den ausgewählten parallelen Linienabschnitten (Z1-Z7) und
Projizieren der zugeordneten Zeilen oder zugeordneten Spalten basierend auf der Lissajous-Figur (10).

2. Projektionsverfahren nach Anspruch 1, wobei die Lissajous-Figur beim Projizieren derart gedreht wird, dass die ausgewählten parallelen Linienabschnitte horizontal auf einer Projektionsfläche (5) verlaufen, wenn den ausgewählten parallelen Linienabschnitten die Zeilen zugeordnet werden oder die ausgewählten parallelen Linienabschnitte vertikal auf der Projektionsfläche (5) verlaufen, wenn den ausgewählten parallelen Linienabschnitten die Spalten zugeordnet werden.

3. Projektionsverfahren nach Anspruch 1 oder 2, wobei die ausgewählten parallelen Linienabschnitte Richtungen aufweisen, die von einer mittleren Richtung um maximal einen Schwellwert abweichen.

4. Projektionsverfahren nach einem der vorhergehenden Ansprüche, wobei die ausgewählten parallelen Linienabschnitte geradlinig sind.

5. Projektionsverfahren nach einem der vorhergehenden Ansprüche, wobei die ausgewählten parallelen Linienabschnitte (Z1-Z7) in Punkte (P) unterteilt werden, die Bildpunkten entlang einer zugeordneten Zeile oder zugeordneten Spalte entsprechen, und die Anzahl der Punkte (P) pro ausgewähltem parallelen Linienabschnitt (Z1-Z7) größer als eine Anzahl von Kreuzungspunkten (17) des ausgewählten parallelen Linienabschnitts (Z1-Z7) mit quer laufenden Linienabschnitten (16) der Lissajous-Figur (10) gewählt wird.

6. Projektionsverfahren nach einem der vorhergehenden Ansprüche, wobei die Zeilen des Bildes in einem Speicher (30) entsprechend ihrer Abfolge beim Projizieren mit der Lissajous-Figur (10) sortiert abgelegt werden.

7. Projektionsverfahren nach Anspruch 6, wobei Bildpunkte einer Zeile, die mit einem linkslaufenden Strahl der Lissajous-Figur projiziert werden, in einer ersten Reihenfolge abgespeichert werden und Bildpunkte einer Zeile, die mit einem rechts-laufenden Strahl der Lissajous-Figur projiziert werden, in einer zweiten Reihenfolge abgespeichert werden, wobei die erste Reihenfolge zur zweiten Reihenfolge invertiert ist.

8. Projektionsvorrichtung mit:
einer Ablenkvorrichtung (5), die zwei unterschiedliche Schwingungsebenen zum Erzeugen einer Lissajous-Figur mit einem reflektierten Lichtstrahl (3) aufweist;
einer Lichtmodulationseinrichtung (30) zum Modulieren der Intensität des Lichtstrahls (3) entsprechend einer Zeile oder einer Spalte eines Bildes und
einer Steuereinrichtung (6) zum Auswählen von parallelen Linienabschnitten (Z1-Z7) einer Lissajous-Figur (10) und zum Zuordnen der Zeilen oder der Spalten des Bildes zu den ausgewählten parallelen Linienabschnitten (Z1-Z7).

9. Projektionsvorrichtung nach Anspruch 8, wobei die Schwingungsebenen der Ablenkeinrichtung derart gegenüber einer horizontalen Richtung gedreht sind, dass die ausgewählten Linienabschnitte parallel oder senkrecht zu der horizontalen Richtung projiziert werden.
